# EUROPÄISCHE PATENTSCHRIFT

(11) **EP 2 540 200 B1**
(45) Veröffentlichungstag und Bekanntmachung des Hinweises auf die Patenterteilung: **18.06.2014**
(21) Anmeldenummer: 12174017.9
(22) Anmeldetag: 28.06.2012
(51) Int. Cl.: A47J 31/44

(54) **Aufschäumeinheit, insbesondere zum Aufschäumen von Milch, mit umströmter Dampfdüse**
Foaming unit, in particular for foaming milk, with surrounded steam nozzle
Unité de moussage, notamment pour le moussage de lait, avec une buse à vapeur entourée

(30) Priorität: 30.06.2011 DE 102011107622
(43) Veröffentlichungstag der Anmeldung: 02.01.2013
(73) Patentinhaber: WMF AG, 73312 Geislingen/Steige (DE)
(72) Erfinder: Dollner, Sander, 89079 Ulm-Wiblingen (DE); Bönsch, Torsten, 73312 Geislingen/Steige (DE); Gussmann, Jochen, 73527 Schwäbisch-Gmünd (DE)
(74) Vertreter: Pfenning, Meinig & Partner GbR

(56) Entgegenhaltungen:
- EP-A1- 1 977 668
- EP-A1- 2 080 456
- EP-A1- 2 407 068
- DE-U1-202004 014 737
- FR-A1- 2 638 083

## Beschreibung

Die vorliegende Erfindung bezieht sich auf eine Aufschäumeinheit (insbesondere zum Aufschäumen von Milch oder eines Milch-Luft-Gemischs) mit einer Dampfzuleitung zur Dampfzufuhr zu einer Dampfdüse (nachfolgend abgekürzt auch als Düse bezeichnet) und mit einer Milchzuführeinheit, mit der dem Dampf Milch oder ein Milch-Luft-Gemisch zuführbar ist. Der Begriff des Zuführens umfasst hierbei insbesondere auch ein Mitreißen der Milch bzw. des Milch-Luft-Gemischs durch den Dampf mittels des an sich bekannten Venturi-Effekts.

Aus dem Stand der Technik (DE 44 45 436 A1) sind bereits Aufschäumvorrichtungen zum Aufschäumen von Milch bekannt, bei denen über Zuleitungen Dampf, Luft und Milch zuführbar sind. Dabei trifft jedoch der mittels des Venturi-Effekts angesaugte Milchstrahl in der Saugkammer (Mischbereich) senkrecht oder vorwiegend senkrecht auf den Dampfstrahl, wodurch es zu Störungen und unerwünschten Wechselwirkungen zwischen dem Milchstrahl und dem Dampfstrahl kommt: Die Saugwirkung ist über die Dosierung hinweg nicht ideal (Heizhysterese, kaltes System, Energieverluste...). In verschiedenen Phasen der Dosierung kann ein seitlich auf den Dampfstrahl treffender Milchstrahl also unterschiedlichen Einfluss haben, so dass die Füllung der nachfolgenden Schäumkammer undefiniert ist.

Aus dem Stand der Technik (FR 2 638 083 A1) ist eine umströmte Dampfdüse (Injektor) bekannt, bei der die Milch außenumfangsseitig entlang des Düsenausgangs entlang strömt, somit auf den aus dem Injektor austretenden Dampf unter einem flachen Winkel auftrifft. Dabei wird die mittels des Venturiprinzips angesaugte Milch dem ringförmigen Spalt um das untere Ende des Injektors tangential zugeführt.

Ausgehend vom Stand der Technik ist daher die Aufgabe der vorliegenden Erfindung, eine Aufschäumeinheit zur Verfügung zu stellen, die diese Störungen und unerwünschten Wechselwirkungen vermeidet. Aufgabe ist es auch, eine Aufschäumeinheit zur Verfügung zu stellen, die die Dampfenergie besser ausnutzt (und Umsetzungsverluste durch Vorbeiströmen von Dampfanteilen am Milchstrahl verringert), die zu einer Geräuschoptimierung beim Aufschäumvorgang führt, deren Einzelteile sich auf einfache und exakte Art und Weise relativ zueinander positionieren lassen und/oder die sich auf einfache Art und Weise auseinanderbauen, reinigen und wieder zusammenbauen lässt. Aufgabe ist darüber hinaus, eine Kaffeemaschine mit einer solchen Aufschätuneinheit zur Verfügung zu stellen (insbesondere: Kaffeevollautomat).

Die vorliegende Aufgabe wird durch eine Aufschäumeinheit gemäß Anspruch 1 sowie durch eine Kaffeemaschine gemäß Anspruch 10 gelöst. Vorteilhafte Ausführungsvarianten lassen sich den abhängigen Ansprüchen entnehmen.

Nachfolgend wird die Erfindung zunächst allgemein, dann anhand eines spezifischen Ausführungsbeispiels beschrieben. Dabei müssen im Rahmen des durch die Patentansprüche vorgegebenen Schutzumfangs nicht alle im Ausführungsbeispiel konkret in Verbindung miteinander gezeigten Merkmale der Erfindung verwirklicht werden. Insbesondere können einzelne der gezeigten Merkmale auch auf andere Art und Weise konstruktiv miteinander kombiniert werden. Insbesondere können darüber hinaus einzelne der gezeigten Merkmale auch weggelassen werden.

Wird nachfolgend im Rahmen der Erfindung von einem Teil einer Einheit (insbesondere: Milchzuführeinheit) gesprochen, so kann es sich bei diesem Teil um einen Teilabschnitt einer einstückig ausgebildeten Einheit handeln. Ebenso kann die Einheit jedoch auch aus mehreren einzelnen Bauelementen bestehen, so dass es sich dann bei diesem Teil um eines der Bauelemente (das dann wiederum einstückig oder mehrstückig ausgebildet sein kann) handeln kann. Entsprechend kann es sich bei einem Teil auch lediglich um einen Teilabschnitt eines einzelnen solchen Bauelements einer mehrstückig ausgebildeten Einheit handeln.

Einer erfindungsgemäßen Aufschäumeinheit kann sowohl Milch als auch ein Milch-Luft-Gemisch zugeführt werden. Nachfolgend wird vereinfacht von der aufzuschäumenden Milch gesprochen, obwohl es sich hierbei auch um eine der Aufschäumeinheit zugeführte Mischung aus Milch und Luft handeln kann. Das Aufschäumen kann (z.B. durch Mitreißen der Milch gemäß des an sich bekannten Venturi-Effekts) durch Zuführen von Dampf, aber auch durch Zuführen eines Dampf-Luft-Gemischs erfolgen. Nachfolgend wird auch hier vereinfacht vom Zuführen von Dampf gesprochen, obwohl es sich ebenso um ein Dampf-Luft-Gemisch handeln kann. Die Milch oder das Milch-Luft-Gemisch kann der Aufschäumeinheit auch mittels eines Fördermittels, z.B. durch eine Pumpe, zugeführt werden.

Eine erfindungsgemäße Aufschäumeinheit zum Aufschäumen von Milch umfasst eine Dampfdüse und eine Dampfzuleitung zum Zuführen des Dampfes zur Düse. Zudem ist mindestens eine Milchzuführeinheit vorgesehen, mit der die Milch dem aus der Düse ausströmenden Dampf zugeführt werden kann. Beispielsweise kann dieses Zuführen dadurch geschehen, dass die in die/durch die Milchzuführeinheit (ein)strömende Milch durch den aus der Dampfdüse austretenden Dampf gemäß des Venturi-Prinzips mitgerissen wird.

Es sind also auch mehrere Milchzuführeinheiten denkbar.

Erfindungsgemäß sind die mindestens eine Milchzuführeinheit und die Dampfdüse so ausgebildet, ausgeformt und angeordnet, dass mit der Milchzuführeinheit die Milch dem aus der Dampfdüse ausströmenden Dampf in einer die Düse entlang deren Ausströmungsrichtung gesehen düsenaußenumfangsseitig zumindest abschnittsweise umströmenden Weise zuführbar ist. Die Milch kann, in Längsachsrichtung der Düse bzw. in Ausströmungsrichtung der Düse gesehen, an der äußeren Oberfläche der z.B. konusförmig ausgeformten Düse entlangströmen, bevor sie auf den aus dem lichten Innenvolumen der Düse austretenden Dampf trifft und/oder von letzterem gemäß des Venturi-Prinzps mitgerissen wird. Dabei kann der Winkel, mit dem die Milch auf den austretenden Dampfstrom trifft, ein spitzer, also deutlich kleiner als 45° sein, so dass Pralleffekte beim Auftreffen des Milchstroms auf den Dampfstrom möglichst umfassend vermieden werden können.

In einer ersten vorteilhaften Ausgestaltungsvariante umfasst (das heißt umschließt oder umgreift) die Milchzuführeinheit oder mindestens ein Teil derselben die Düse und/oder deren Ausgang über deren/dessen Außenumfang gesehen zumindest abschnittsweise, bevorzugt vollständig. Idealerweise strömt die Milch somit über die Außenfläche der Düse deren gesamten Außenumfang (360° Konfiguration) entlang, bevor sie dann, auf Höhe des Ausgangs der Düse beginnend, vom aus der Düse austretenden Dampfstrom mitgerissen wird.

Vorteilhafterweise ist die Düse und/oder deren Ausgang zumindest abschnittsweise konzentrisch innerhalb der Milchzuführeinheit oder mindestens eines Teils derselben geführt.

Wie bereits beschrieben, kann ein Pralleffekte und/oder Wirbeleffekte möglichst gering haltender, sanfter Übergang des Milchstroms in den Dampfstrom dadurch realisiert werden, dass die Ausströmungsrichtung des Dampfstroms aus der Düse einerseits und die Strömungsrichtung der Milch entlang der Außenoberfläche der Düse andererseits auf Höhe des Ausgangs der Düse um einen Winkel von beispielsweise weniger als 30°, bevorzugt weniger als 20°, besonders bevorzugt weniger als 10°, voneinander abweichen.

In einer weiteren vorteilhaften Ausgestaltungsvariante wird der (mit) der Aufschäumeinheit zugeführte Milchstrom zunächst umgelenkt, bevor er dann in der vorbeschriebenen Art und Weise in den Dampfstrom gelenkt bzw. von letzterem mitgerissen wird: Hierzu kann die Milchzuführeinheit oder ein Teil derselben einen die Düse und/oder deren Ausgang außenumfangsseitig zumindest abschnittsweise (bevorzugt: vollständig, d.h. in 360°-Konfiguration in einer Ebene senkrecht zur Ausströmungsrichtung aus der Düse gesehen) umschließenden, von der Düse beabstandeten Überströmkragen ausbilden. Dieser Überströmkragen (der z.B. näherungsweise die Form eines Hohlzylinderabschnitts aufweisen kann) ist von außen mit der Milch anströmbar und mit ihm wird die Milch in Richtung zur Ausströmungsrichtung aus der Düse hin umgelenkt, so dass die Milch der Milchzuführeinheit nicht unbedingt bereits in der für den Eintritt in den Dampfstrom vorgesehenen Richtung zugeführt werden muss.

Vorzugweise ist dabei ein den Außenumfang des Überströmkragens zumindest teilweise (bevorzugt: vollständig, d.h. in 360°-Konfiguration in einer Ebene senkrecht zur Ausströmungsrichtung aus der Düse gesehen) umschließender lichter Bereich (Hohlraum) vorgesehen, dem die Milch bzw. der Milchstrom (in Bezug auf den Außenumfang des Überströmkragens gesehen) tangential zugeführt werden kann. Das bevorzugt tangentiale Zuführen des Milchstroms kann dabei mittels einer oder mehrerer in den lichten Bereich tangential einmündenden, z.B. rohrförmig ausgebildeten Milchzuleitung(en) geschehen. Dabei kann der lichte Bereich zumindest abschnittsweise ringförmig ausgebildet sein (vorzugsweise: vollständiger Ring) und/oder auch außenumfangsseitig von einem Teil (Wandabschnitt) der Milchzuführeinheit umgeben sein.

Die vorbeschriebene(n) Milchzuleitung(en) kann/können dabei senkrecht zur Ausströmungsrichtung aus der Düse in den Hohlraum bzw. lichten Bereich einmünden.

Die Aufschäumeinheit kann so ausgebildet sein, dass durch die Milchzuführeinheit (oder zumindest einen Teil derselben, insbesondere durch den Überströmkragen) und/oder durch die Düse die Milch zunächst entgegen der Ausströmungsrichtung der Düse gelenkt wird, bevor sie anschließend zur Ausströmungsrichtung der Düse hin umgelenkt wird. Dies lässt sich durch eine geeignete geometrische Ausgestaltung der Milchzuführeinheit (oder der betroffenen Teile derselben) und/oder der Düse, insbesondere deren Außengeometrie(en), realisieren.

Dieses einfache oder mehrfache Umlenken hat den Vorteil, dass die Milch einer zwangsweisen Verteilung im ringförmigen lichten Bereich unterliegt, also quasi ringförmig angesaugt wird. Ebenso ist jedoch eine Milcheinleitung oberhalb des Düsenaustritts mit dortiger ringförmiger Verteilung denkbar.

Vorteilhafterweise wird zwischen der Düse und der Milchzuführeinheit (oder zumindest von Teilen der Letzteren) und/oder im Bereich des Düsenausgangs ein Mischbereich (bei der Realisierung des Venturiprinzips: Saugkammer) zum Vermischen des aus der Düse ausströmenden Dampfes mit der Milch ausgebildet. Vorzugsweise verjüngt sich der Mischbereich oder ein Abschnitt desselben in Ausströmungsrichtung der Düse zum Erhöhen der Strömungsgeschwindigkeit. Die Verjüngung kann dabei durch geeignete geometrische Ausgestaltung der Düse (Außengeometrie derselben) und/oder der Milchzuführeinheit (Innengeometrie derselben) so ausgebildet und platziert werden, dass ein Erhöhen der Strömungsgeschwindigkeit der Milch vor dem Zusammenführen von Milch und Dampf stattfindet. Ebenso ist jedoch eine Konstruktion denkbar, bei der das Verjüngen in Strömungsrichtung gesehen erst nach dem Zusammenführen von Milch und Dampf stattfindet. Selbstverständlich sind auch Konstruktionen denkbar, bei denen die Verjüngung in Strömungsrichtung gesehen sowohl im Bereich vor dem Zusammenführen als auch im Bereich nach dem Zusammenführen realisiert ist. Die Verjüngung kann dabei insbesondere durch eine Reduzierung des z.B. in 360°-Konfiguration, also ringförmig, ausgebildeten Strömungsquerschnitts des Milch- und/oder des Milch-Dampf-Strömungsweges im Inneren der Milchzuführeinheit ausgebildet sein (Verkleinerung der Ringspaltbreite zum Düsenausgang hin).

Dabei kann der vorbeschriebene Mischbereich oder zumindest ein Abschnitt desselben die Düse und/oder deren Düsenausgang zumindest abschnittsweise, bevorzugt vollständig, in 360°-Konfiguration ringförmig umgeben.

Besonders bevorzugt ist es, wenn die Bauteile Düse, Dampfzuleitung und Milchzuführeinheit (bzw. die Teile derselben) der Aufschäumeinheit zumindest abschnittsweise (bevorzugt: vollständig über 360°) rotationssymmetrisch so ausgebildet und angeordnet sind, dass die Rotationsachsen der Düse, der Dampfzuleitung und der Milchzuführeinheit (bzw. der einzelnen Teile derselben) in einer gemeinsamen Rotationsachse zusammenfallen, die genannten Bauteile bzw. deren innere Hohlvolumina also fluchten.

Die Milchzuführeinheit kann einstückig oder auch mehrstückig (d.h. mit mehreren einzelnen Teilen) ausgebildet sein. Die Milchzuführeinheit oder zumindest eines oder mehrere der Teile derselben (bevorzugt alle einzelnen Teile derselben) können zumindest abschnittsweise (bevorzugt: komplett) aus einem elastisch verformbaren Material ausgebildet sein. Bei diesem Material kann es sich um ein Elastomer handeln.

Die Düse kann zumindest abschnittsweise (bevorzugt: komplett) aus einem starren Material ausgebildet werden. Insbesondere kann es sich dabei um einen Hartkunststoff handeln; aber auch Metalle oder Metalllegierungen wie z.B. Edelstahl oder Aluminium sind denkbar.

Bei einer erfindungsgemäßen Kaffeemaschine, die eine (oder auch mehrere) der vorbeschriebenen Aufschäumeinheiten umfasst, kann die Dampfzuleitung der Aufschäumeinheit fest mit einem Gehäuse der Kaffeemaschine verbunden sein. Das eine Ende der Dampfzuleitung ist dabei im Gehäuse angeordnet, das andere Ende außerhalb des Gehäuses. An letztgenanntem Ende können dann die Milchzuführeinheit und/oder die Düse (bevorzugt: beide) abdichtend mit der Dampfzuleitung verbunden werden. Die Verbindung kann dabei lösbar ausgestaltet sein. Insbesondere durch Ausbilden der Milchzuführeinheit bzw. der Teile derselben aus einem elastisch verformbaren Material können sowohl die abdichtende Verbindung mit der Dampfzuleitung als auch das Zusammensetzen der einzelnen Bestandteile der Milchzuführeinheit und auch ein Einführen der Düse in die Milchzuführeinheit (also ein Assemblieren des Milchzuführeinheit-Düsen-Verbundes) auf einfache Art und Weise realisiert werden.

Erfindungsgemäß kann somit Milch oder ein Milch-Luft-Gemisch tangential einem ringförmigen Bereich zugeführt, verteilt und so umgelenkt werden, dass sie/es mithilfe eines Überströmkragens die Dampfdüse umströmt und unter Ausnutzen eines Großteils einer zwischen dem Überströmkragen und der Dampfdüse gebildeten Ringfläche einen Beschleunigungsbereich (Querschnittsverringerung dieser Ringfläche) durchströmt. Die Milch bzw. das Milch-Luft-Gemisch berührt somit im Bereich des Zusammenströmens mit dem Dampfstrom (im Mischbereich) letzteren intensiv und mit größtmöglicher Fläche, ohne dass es dabei zu einer starken Verwirbelung und/oder zu Pralleffekten kommt. Der Milchstrahl kann so umgelenkt werden, dass die Dampfdüse umströmt wird und die Milch ringförmig in den Beschleunigungsbereich bzw. eine entsprechende Bohrung eintritt. (Es kommt somit zu einem Aufschäumen und Erwärmen der Milch, indem Milch, Dampf und Luft zusammengeführt werden: Der Milchstrom wird einem ringförmigen Bereich zugeführt und mithilfe des Überströmkragens so umgelenkt, dass er einen als Beschleunigungsstrecke ausgebildeten Mischbereich an der Außenseite der Düse durchströmt, bevor er flach auf den austretenden Dampfstrom trifft.) Der Milchstrom kann dem ringförmigen Bereich dabei tangential zugeführt werden. Es kann (durch den Überströmkragen) zunächst eine Umlenkung des Milchstroms in eine Richtung, die der Hauptströmungsrichtung des Dampfstromes aus der Düse entgegengesetzt ist, realisiert werden. Anschließend kann durch eine geeignete Ausbildung der Strömungsführungsgeometrie im Inneren der Milchzuführeinheit (insbesondere auch durch geeignete Modellierung der Außenfläche der Düse) eine weitere Umlenkung des Milchstroms wie gewünscht in die Strömungsrichtung des Dampfstrahls erfolgen. Die (tangentiale) Zuführung des Milchstroms kann dabei in Bezug auf die Dampfströmungsrichtung bzw. die Längsachse der Dampfdüse gesehen im Wesentlichen radial (d.h. zum Zentrum hin gerichtet) erfolgen.

Der Milchstrom umströmt die Dampfdüse somit zwangsweise, wobei es bevorzugt zu einer Beschleunigung des Milchstroms durch eine im Verlauf der Strömung sich verringernde Querschnittsfläche des Ringspaltes bzw. des entsprechenden Hohlraums kommt. Der Milchstrom umschließt den Dampfstrom somit zumindest im Wesentlichen.

Die Milchzuführeinheit kann mehrere Elemente aus Elastomer umfassen, kann jedoch auch als einteiliges Element für die Milchansaugung, zur Dichtungsfunktion und zur Dampfdüsenaufnahme vollständig aus Elastomer ausgebildet sein.

Die erfindungsgemäße Aufschäumeinheit hat im Vergleich zu den aus dem Stand der Technik bekannten Aufschäumeinheiten eine Reihe von Vorteilen:
- Der Austritt des Milch/Dampf/Luft-Gemisches ist zentrisch, der Strahl wird somit nicht durch einen seitlichen Eintritt von Milch in eine Vorzugsrichtung gelenkt. Es ergibt sich somit eine verbesserte Rechts-links-Verteilung bei einem Schäumer mit der vorbeschriebenen Aufschäumeinheit nachgeschaltetem doppeltem Milchauslauf.
- Dampf- und Milchstrahl können auf optimale Art und Weise aufeinander abgestimmt werden, da erfindungsgemäß durch Pralleffekte verursachte Zerstäubungsverluste vermieden werden. Zwischen Dampfstrahl und Milchstrahl entstehen weniger störende Wechselwirkungen, so dass sich z.B. ein Kaffeevollautomat mit erfindungsgemäßer Aufschäumeinheit im Grenzbetrieb nicht so leicht aufschaukeln kann. (Bei ungünstiger Toleranzlage kann es vorkommen, dass die Ansaugleistung zum Ansaugen der Milch geschwächt ist und der Milchstrom beim Auftreffen auf den Dampfstrahl wieder abbricht, erneut angesaugt wird usw....)
- Durch das erfindungsgemäße konzentrische Ineinanderführen eines inneren Dampfstroms und eines außen herum um diesen Dampfstrom strömenden Milchstroms ergibt sich auch eine effektivere Ausnutzung der Dampfenergie durch die vergrößerte Kontaktfläche zwischen dem Dampfstrom und dem durch diesen mitgerissenen Milchstrom. Die Verluste durch ein Vorbeiströmen von Dampfanteilen am Milchstrom lassen sich somit verringern.
- Die erfindungsgemäße Aufschäumeinheit führt auch zu einer verbesserten Akustik: Die Aufschäumeinheit ist subjektiv leiser oder zumindest angenehmer im Klang (es tritt weniger "Fauchen" bei der Ausgabe des Gemisches aus Milch und Dampf auf).
- Auch unter mechanischen Gesichtspunkten weist die erfindungsgemäße Aufschäumeinheit eine Reihe von Vorteilen auf: Die Dampfdüse ist in das Innere der Milchzuführeinheit (bzw. den Schäumer) integriert, hat eine exakte Positionierung zur weiteren Schäumergeometrie, also insbesondere den einzelnen Teilen der Milchzuführeinheit, ohne dass hier eine unerwünschte Toleranzkette auftritt (die einzelnen Bauteile haben eine gemeinsame Längsachse und fluchten somit, so dass unerwünschte Toleranzen, z.B. durch seitliches Verschieben einzelner Teile, weitestmöglich vermieden werden können). (Die Toleranzen sind im Wesentlichen durch die Fertigungsgenauigkeit der einzelnen Teile bzw. der einzelnen konzentrisch zueinander auszurichtenden Bohrungen in diesen Teilen definiert.)
- Weitere konstruktive Vorteile sind, dass auf einfache Art und Weise eine einstückige oder zweistückige Milchzuführeinheit für die Milchzufuhr (über einen entsprechenden Milchzuleitungsabschnitt), für die Dichtungsfunktion (zwischen den einzelnen Bauelementen der Aufschäumeinheit und auch zum Gehäuse der Kaffeemaschine hin) und zur Dampfdüsenaufnahme vollständig aus einem Elastomer-Werkstoff ausgebildet werden kann.
- Dabei kann die Dampfdüse aufgrund der vorbeschriebenen Verwendung eines Elastomer-Werkstoffs werkzeuglos entnommen werden.

Nachfolgend wir eine erfindungsgemäße Aufschäumeinheit anhand eines Ausführungsbeispiels beschrieben.

Dabei zeigen:
- Figur 1:: einen Längsschnitt entlang der Längs- bzw. Rotationsachse der Aufschäumeinheit und
- Figur 2: einen Querschnitt senkrecht zur Längs- bzw. Rotationsachse der Aufschäumeinheit auf Höhe A-A (vergleiche Figur 1).

Die erfindungsgemäße Aufschäumeinheit umfasst eine hier aus zwei vollständig aus einem Elastomer ausgebildeten Teilen 3a und 3b bestehende Milchzuführeinheit 3, wobei das zweite Teil 3b der Milchzuführeinheit 3 entlang der Längs- bzw. Rotationsachse 11 der Aufschäumeinheit konzentrisch in das erste Teil 3a der Milchzuführeinheit einschiebbar ist und dort (siehe nachfolgend) kraftschlüssig befestigt werden kann. Die beiden Teile 3a und 3b sind dabei (bis auf die Milchzuleitung 9 des ersten Teils 3a, siehe nachfolgend) rotationssymmetrisch um vorgenannte Achse 11 ausgebildet.

Die Aufschäumeinheit umfasst darüber hinaus eine im Wesentlichen konisch ausgebildete Dampfdüse 1, die ebenfalls konzentrisch in das erste Teil 3a der Aufschäumeinheit 3 einschiebbar ist und dort an ihrer vorbestimmten Position kraft- und formschlüssig befestigt werden kann.

Die Dampfdüse 1 ist hier aus Hartkunststoff ausgebildet, die Dampfzuleitung 2 ebenso.

Im gezeigten Beispiel ist die Dampfzuleitung 2 der Aufschäumeinheit als mit einem Ende 2a abschnittsweise ebenfalls konzentrisch in das erste Teil 3a der Milchzuführeinheit 3 (aus entgegengesetzter Richtung wie die Elemente 1 und 3b) entlang der Achse 11 einschiebbarer Rohrabschnitt ausgebildet, der mit seinem gegenüberliegenden Ende 2b im Gehäuse 12 eines Kaffeevollautomaten (von dem hier lediglich das Gehäuse 12 angedeutet ist) befestigt ist. Die Dampfzuleitung der erfindungsgemäßen Aufschäumeinheit muss aber nicht als separates, mit dem Kaffeevollautomaten verbundenes Bauteil ausgebildet sein, sondern kann auch z.B. als Teil der Milchzuführeinheit 3 ausgebildet sein (beispielsweise als ein im ersten Teil 3a ausgebildeter Rohrabschnitt; hier nicht gezeigt).

Der aus einem Elastomer ausgebildete Teil 3a ist im Wesentlichen als beidseits geöffneter Hohlzylinder ausgebildet, wobei die Öffnung am einen, hier oben liegenden Ende, einen verringerten Öffnungsdurchmesser aufweist und zur zentrischen Aufnahme des freiliegenden Endes 2a der aus dem Gehäuse 12 des Kaffeevollautomaten herausgeführten Dampfzuleitung 2 ausgebildet ist. Dieser verringerte Öffnungsquerschnitt an der Oberseite des Teils 3a der Milchzuführeinheit 3 ist durch eine innenliegende, also zum Zentrum bzw. zur Symmetrieachse 11 des Teils 3a weisende Verdickung 13 des oberen Randes des Teils 3a ausgebildet. An ihrem innenliegenden, dem freien Querschnitt bzw. der Öffnung zugewandten Seite weist die Verdickung 13 zwei (in Richtung der Symmetrie- bzw. Rotationsachse 11 gesehen beabstandet voneinander angeordnete) Dichtungselemente 13a und 13b auf.

Der Außendurchmesser des unteren Endes 2a der Dampfzuleitung 2 und der Innendurchmesser der Verdickung 13 sind so aufeinander abgestimmt, dass das Ende 2a formschlüssig in die durch die Verdickung 13 ausgebildete Öffnung des Teils 3a eingeschoben werden kann. Die oben liegende, hier als ein in eine im Innenrand der Verdickung 13 umlaufende Nut eingesetzter Dichtungsring (O-Ring) ausgebildete Dichtung 13a und die unten liegende, hier als nach innen gewölbter, umlaufender Vorsprung des Innenrandes der Verdickung 13 ausgebildete Dichtung 13b sind so ausgeformt, dass das untere Ende 2a nach dem Einschieben in den durch die Verdickung 13 ausgebildeten lichten Hohlraum kraftschlüssig und abdichtend vom Teil 3a gehalten wird. Eine beabstandet vom unteren Rand des Endes 2a angeordnete Verbreiterung 2a' begrenzt den Einschubweg des Endes 2a in die obere Öffnung des Teils 3a der Milchzuführeinheit 3.

Die der Verdickung 13 gegenüberliegende Öffnung an der hier unten liegenden Seite des Teils 3a ist in ihrem Querschnitt nicht verringert, also ohne Vorsehen einer Verdickung ausgeführt und zur form- und kraftschlüssigen Aufnahme des zweiten, hier ebenfalls aus Elastomer ausgebildeten Teils 3b der Milchzuführeinheit 3 wie folgt ausgebildet: Der Innendurchmesser des unteren Endes des Teils 3a und der Außendurchmesser des zweiten Teils 3b sind so aufeinander abgestimmt, dass des zweite Teil 3b von unten (also entlang der Achse 11 entgegen der Dampfströmungsrichtung, siehe nachfolgend) in das erste Teil 3a der Milchzuführeinheit 3 eingeschoben werden kann, wenn die unten liegenden Wandabschnitte des Teils 3a mechanisch vom Zentrum bzw. der Achse 11 weg aufgebogen werden. Nach dem Einschieben des Teils 3b in das Teil 3a und dem Beendigen des mechanischen Aufbiegevorgangs am Teil 3a wird das Teil 3b dann kraftschlüssig innerhalb des Teils 3a abdichtend gehalten. Alternativ dazu (hier nicht gezeigt) kann das zweite Teil 3b jedoch auch ohne Aufbiegen des Teils 3a in letzteres formschlüssig eingeschoben werden und dann mit Hilfe eines Schnappverschlusses im Teil 3a gehalten werden.

Vor dem Einschieben des Teils 3b in das Teil 3a erfolgt jedoch das Einschieben der starren, im Wesentlichen konusförmig ausgebildeten Dampfdüse 1 (mit nach unten gerichteter/m Düsenöffnung bzw. -ausgang 1a der Düse 1). Hierzu wird ebenfalls das Teil 3a am unteren Rand mechanisch aufgebogen und die Düse 1 wird von unten, also entgegen der Dampfströmungsrichtung (siehe nachfolgend) in das Innere des Teils 3a eingeschoben. Die Düse 1 weist hierzu an ihrem oben liegenden, das heißt ihrem hier nach unten weisenden Ausgang 1a gegenüberliegenden Außenrand eine Verdickung auf, die passgenau in eine als Gegenform an der Unterseite der Verdickung 13 ausgebildete Nut 13c des Teils 3a eingeschoben werden kann. Nach dem Beendigen des mechanischen Aufbiegevorgangs am Teil 3a und des Einschiebens der Düse 1 mit ihrer Verdickung des oberen Randes in die Nut 13c wird die Düse 1 somit form- und kraftschlüssig innerhalb des Teils 3a (und oberhalb des Teils 3b, das dann nachfolgend eingeschoben wird) gehalten.

Die (bis auf die Milchzuleitung 9 des Teils 3a, siehe nachfolgend) rotationssymmetrisch ausgeformten Elemente 2 (bzw. deren Ende 2a), 3a, 3b und 1 sind dabei geometrisch so ausgeformt, dass diese Elemente (bzw. deren zur Durchströmung ausgebildeten inneren Hohlraumvolumina) nach den vorbeschriebenen Einsetz- bzw. Einschubschritten miteinander fluchten, also ihre Rotationsachsen in ein und derselben Achse (gemeinsame Rotationsachse 11) zusammenfallen. Der über das obere Ende 2b aus dem Kaffeevollautomaten bzw. dessen Gehäuse 12 im Inneren der Zuleitung 2 zugeführte Dampf D (oder ein zugeführtes Dampf-Luft-Gemisch D/L) kann somit entlang der gemeinsamen Rotationsachse 11 und in Ausströmungsrichtung 4 der Düse 1 durch die aufeinander zentrierten inneren Hohlräume dieser Elemente 2, 3a, 1 und 3b hindurchströmen. Ein ausreichender Kraftschluss verhindert dabei ein Lösen des an das untere Ende 2a angeflanschten ersten Teils 3a der Milchzuführeinheit 3.

Alternativ dazu (hier nicht gezeigt) können die beiden Teile 3a, 3b der Milchzuführeinheit 3 auch als ein gemeinsames, einstückiges Elastomerteil ausgebildet werden: Die Elastizitätseigenschaften des verwendeten Elastomermaterials müssen dann ein Aufbiegen dieser einstückigen Milchzuführeinheit 3 soweit erlauben, dass die Düse 1 eingeschoben werden kann.

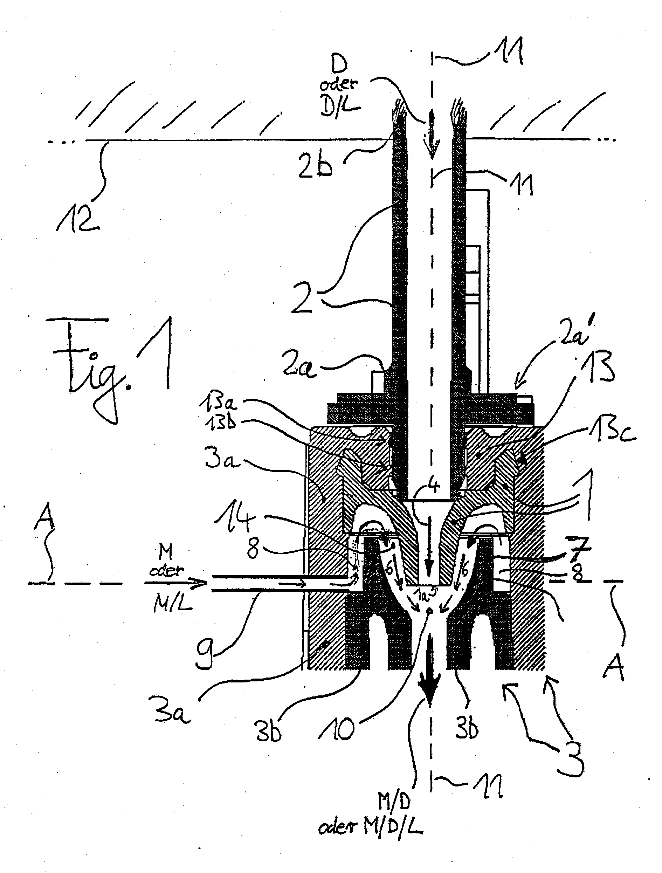

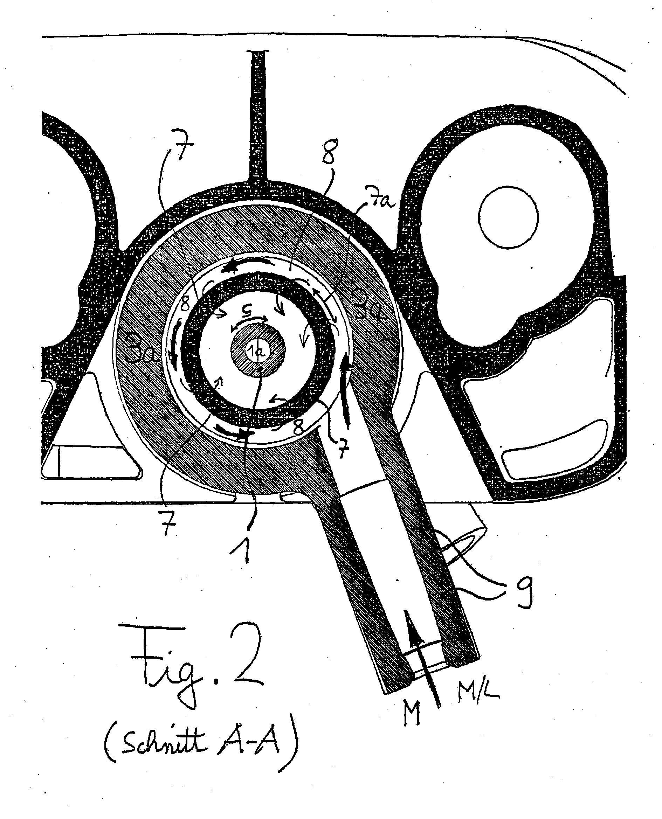

Wie Figur 1 zeigt, weist das zweite Teil 3b an seinem oberen, der Düse 1 zugewandten Ende einen im Wesentlichen als Wandung eines Hohlzylinders ausgebildeten, den Kegelstumpf der Düse 1 in Richtung der Achse 11 gesehen abschnittweise und in Richtung entlang des Düsenumfangs gesehen vollständig umschließenden, beabstandet von der Düse 1 ausgebildeten Überströmkragen 7 auf. Wie Figur 2 im Querschnitt A-A zeigt, ergibt sich somit in Achsrichtung 11 gesehen auf Höhe des Ausgangs 1a der Düse 1 konzentrisch von außen nach innen (das heißt zum Zentrum bzw. zur Achse 11 hin gesehen) die folgende Bauteilabfolge: Wandung des Teils 3a, Hohlraum bzw. lichter Bereich 8, Überströmkragen 7, weiterer lichter Bereich bzw. Hohlraum 14, Wandung der Düse 1 und inneres Hohlvolumen bzw. Ausgang 1a der Düse. Die vorgenannten Elemente sind dabei kreisringförmig konzentrisch ineinander geführt.

Wie Figur 2 zeigt, umfasst das Teil 3a auf Höhe des Ausgangs 1a der Düse eine tangential aus dem äußeren lichten Bereich 8 nach außen führenden Rohrabschnitt, die Milchzuleitung 9 der Milchzuführeinheit: Mit dieser kann (z.B. aus einem externen hier nicht gezeigten Gefäß in Form eines Tetrapaks) Milch M oder ein Milch-Luft-Gemisch M/L in Tangentialrichtung in den äußeren lichten Bereich 8 eingeströmt werden. Da der Überströmkragen 7 des zweiten Teils 3b in Richtung der Rotationsachse 11 (jedoch entgegen der Ausströmungsrichtung 4 für den Dampf gesehen) in Bezug auf den auf Höhe A-A angeordneten Ausgang 1a der Düse 1 übersteht, trifft die Milch M (bzw. M/L) nach Einleiten durch die hier im Wesentlichen radial, das heißt senkrecht zur Ausströmungsrichtung 4 nach außen geführte Milchzuleitung 9 zunächst auf den der Milchzuleitung 9 gegenüberliegenden Abschnitt des Überströmkragens 7 und wird dort entlang des Außenumfangs 7a des Kragens 7 in die übrigen Abschnitte des Hohlraums 8 geleitet (dicke Pfeile in Figur 2), bevor sie, wenn eine ausreichende Menge an Milch M nachgeströmt ist, schließlich den nach oben überstehenden Überströmkragen 7 überwinden kann (dünne, gebogene Pfeile in Figur 2) und in den Zwischenraum zwischen dem Überströmkragen 7 und der Düse 1 fließt, also vom äußeren lichten Bereich 8 in den weiteren, inneren lichten Bereich 14 einströmt. Die Milchzufuhr geschieht hier aufgrund des Unterdrucks des an sich bekannten Venturiprinzips beim Durchströmen der Elemente 2 (bzw. 2a), 3a, 1 und 3b mit Dampf D (bzw. D/L), der die Milch M über den Strömungspfad 9, 8 und 14 ansaugt und mitreißt. Bei ausreichendem Überstand des Überströmkragens 7 relativ zum Ausgang 1a nach oben (ca. 1 bis 2 cm) kann sichergestellt werden, dass sich die Milch im gesamten lichten Bereich 8 (also über den gesamten Außenumfang 7a des Überströmkragens 7) verteilt, somit die äußere Oberfläche bzw. den Außenumfang 5 der Düse 1 (im Hohlvolumen 14) vollständig umspült, bevor sie schließlich (durch den vorbeschriebenen Unterdruck) vom durch den Ausgang 1a strömenden Dampf in den unterhalb des Ausgangs 1a ausgebildeten Mischbereich 10 mitgerissen und dort mit dem ausströmenden Dampf in ein Gemisch aus Milch und Dampf M/D bzw. aus Milch, Dampf und Luft M/D/L überführt wird.

Es ist auch denkbar (hier nicht gezeigt), mehrere tangential zuführende Milchzuleitungen 9, die über den Umfang des lichten Bereichs 8 verteilt in letzteren einmünden, vorzusehen.

Die einströmende Milch wird somit zunächst im äußeren ringförmigen Hohlraum 8 entgegen der Ausströmungsrichtung 4 gelenkt, bevor sie, vom außenliegenden Fußabschnitt der Düse 1 einerseits und vom oberen Rand des Überströmkragens 7 andererseits umgelenkt, ihre Richtung in die Gegenrichtung, also im Wesentlichen in Ausströmungsrichtung 4 ändert und in dieser Richtung durch den inneren ringförmigen Hohlraum 14 fließt. Der Auftreffwinkel der durch den inneren Ringbereich 14 fließenden Milch auf den Dampf D, also der Winkel zwischen der Strömungsrichtung 6 der Milch im inneren Ringbereich 14 und der Ausströmungsrichtung 4 des Dampfes durch die Düse 1 ist somit ausreichend spitz (hier ca. 10° bis 20°), so dass eine ausreichend große Kontaktfläche zwischen einströmender Milch und ausströmendem Dampf entsteht und die Verluste durch an dem Milchstrom vorbeiströmende Dampfanteile minimiert werden.

Durch eine geeignete, trichterförmige Ausbildung der der Symmetrieachse 11 zugewandten Oberfläche des zweiten Teils 3b (und dessen Überströmkragens 7) und des äußeren Querschnitts des Düsenkonus 1 verringert sich im inneren Ringbereich 14 zwischen Überströmkragen 7 und Düse 1 sowie auch im unterhalb des Ausgangs 1a von der lichten Innenweite des Teils 3b ausgebildeten, von der Milch M bzw. vom Gemisch M/D durchströmten Hohlraum die freie Querschnittsfläche in Richtung der Ausströmungsrichtung 4 (Verminderung der Ringspaltfläche zur Ausgabeseite hin). Der innere ringförmige Bereich 14 sowie der Mischbereich 10 sind somit als Beschleunigungsbereiche ausgebildet, in dem die Strömungsgeschwindigkeit des darin fließenden Fluids sukzessive erhöht wird, bevor dieses dann schließlich aus dem Mischbereich 10 nach unten abgegeben wird. (Dem Strömen des Gemischs M/D bzw. M/D/L im hier gezeigten Abschnitt des zweiten Teils 3b kann sich bei Kaffeevollautomaten mit mehreren Ausgabeleitungen noch eine hier nicht gezeigte Verteilung des Gemisches auf diese mehreren Ausgabeleitungen vor seiner Ausgabe in ein externes Behältnis, wie beispielsweise eine Tasse, anschließen, die hier nicht gezeigt ist.)

## Patentansprüche

1. Aufschäumeinheit insbesondere zum Aufschäumen von Milch (M) oder eines Milch-Luft-Gemischs (M/L), mit
einer Düse (1) und einer Dampfzuleitung (2) zum Zuführen von Dampf (D) oder eines Dampf-Luft-Gemischs (D/L) zur Düse (1) und
einer Milchzuführeinheit (3), mit der die Milch (M) oder das Milch-Luft-Gemisch (M/L) dem aus der Düse (1) ausströmenden Dampf (D) oder Dampf-Luft-Gemisch (D/L) in einer die Düse (1) entlang deren Ausströmungsrichtung (4) gesehen düsenaußenumfangsseitig zumindest abschnittsweise umströmenden Weise zuführbar ist,
***dadurch gekennzeichnet, dass***
die Milchzuführeinheit (3) oder ein Teil (3b) derselben einen die Düse (1) und/oder deren Ausgang (1a) außenumfangsseitig (5) vollständig umfassenden, von der Düse (1) beabstandeten Überströmkragen (7) ausbildet, der mit der Milch (M) oder dem Milch-Luft-Gemisch (M/L) anströmbar ist und mit dem die Milch (M) oder das Milch-Luft-Gemisch (M/L) in Richtung zur Ausströmungsrichtung (4) aus der Düse (1) hin umlenkbar ist.

2. Aufschäumeinheit nach dem vorhergehenden Anspruch
***gekennzeichnet durch***
einen den Außenumfang (7a) des Überströmkragens (7) umfassenden lichten Bereich (Hohlraum 8), dem die Milch (M) oder das Milch-Luft-Gemisch (M/L) - in Bezug auf den Außenumfang (7a) des Überströmkragens (7) gesehen - bevorzugt tangential zuführbar ist, bevorzugt mittels einer oder mehrerer in den lichten Bereich (8) tangential einmündenden/r Milchzuleitung(en) (9) zuführbar ist,
wobei der lichte Bereich (8) bevorzugt zumindest abschnittsweise ringförmig ausgebildet ist und/oder bevorzugt außenumfangsseitig von einem Teil (3a) der Milchzuführeinheit (3) umgeben ist.

3. Aufschäumeinheit nach dem vorhergehenden Anspruch
***dadurch gekennzeichnet, dass***
die Milchzuleitung(en) (9) senkrecht zur Ausströmungsrichtung (4) der Düse (1) in den lichten Bereich (8) einmündet/n.

4. Aufschäumeinheit nach einem der vorhergehenden Ansprüche
***dadurch gekennzeichnet, dass***
durch die Milchzuführeinheit (3) oder mindestens einen Teil (3a, 3b, 7) derselben, insbesondere durch den Überströmkragen (7), und/oder durch die Düse (1) die Milch (M) oder das Milch-Luft-Gemisch (M/L) zunächst entgegen der Ausströmungsrichtung (4) der Düse (1) lenkbar und anschließend zur Ausströmungsrichtung (4) der Düse (1) hin umlenkbar ist.

5. Aufschäumeinheit nach einem der vorhergehenden Ansprüche
***gekennzeichnet durch***
mehrere Milchzuführeinheiten (3), mit denen die Milch (M) oder das Milch-Luft-Gemisch (M/L) dem aus der Düse (1) ausströmenden Dampf (D) oder Dampf-Luft-Gemisch (D/L) in einer die Düse (1) entlang deren Ausströmungsrichtung (4) gesehen düsenaußenumfangsseitig zumindest abschnittsweise umströmenden Weise zuführbar ist.

6. Aufschäumeinheit nach dem vorhergehenden Anspruch
***dadurch gekennzeichnet, dass***
die Milchzuführeinheit (3) oder mindestens ein Teil (3a, 3b, 7) derselben die Düse (1) und/oder deren Ausgang (1a) über deren/dessen Außenumfang (5) gesehen zumindest abschnittsweise, bevorzugt vollständig umfasst und/oder dass die Düse (1) und/oder deren Ausgang (1a) zumindest abschnittsweise konzentrisch innerhalb der Milchzuführeinheit (3) oder mindestens eines Teils (3a, 3b, 7) derselben geführt ist.

7. Aufschäumeinheit nach einem der vorhergehenden Ansprüche
***dadurch gekennzeichnet, dass***
die Ausströmungsrichtung (4) des Dampfs (D) oder Dampf-Luft-Gemischs (D/L) aus der Düse (1) einerseits und die Strömungsrichtung (6) der Milch (M) oder des Milch-Luft-Gemischs (M/L) entlang der Außenseite (5) der Düse (1) andererseits auf Höhe des Ausgangs (1a) der Düse um einen Winkel von weniger als 30°, bevorzugt weniger als 20°, bevorzugt weniger als 10° voneinander abweichen.

8. Aufschäumeinheit nach einem der vorhergehenden Ansprüche
***dadurch gekennzeichnet, dass***
zwischen der Düse (1) und der Milchzuführeinheit (3) oder eines Teils (3b, 7) derselben und/oder im Bereich des Ausgangs (1a) der Düse (1) ein Mischbereich (10) zum Vermischen des aus der Düse (1) ausströmenden Dampfs (D) oder Dampf-Luft-Gemischs (D/L) mit der Milch (M) oder dem Milch-Luft-Gemisch (M/L) ausgebildet ist,
wobei bevorzugt der Mischbereich (10) oder ein Abschnitt desselben sich in Ausströmungsrichtung (4) der Düse (1) gesehen verjüngt zum Erhöhen der Strömungsgeschwindigkeit vor und/oder nach dem Zusammenführen der Milch (M) oder des Milch-Luft-Gemischs (M/L) mit dem Dampf (D) oder Dampf-Luft-Gemisch (D/L) und/oder bevorzugt der Mischbereich (10) oder ein Abschnitt desselben die Düse (1) und/oder deren Ausgang (1a) zumindest abschnittsweise ringförmig umgibt.

9. Aufschäumeinheit nach einem der vorhergehenden Ansprüche
***dadurch gekennzeichnet, dass***
mindestens zwei, bevorzugt alle drei der nachfolgenden Bauteile
• Düse (1),
• Dampfzuleitung (2) und
• Milchzuführeinheit (3)
zumindest abschnittsweise rotationssymmetrisch so ausgebildet und angeordnet sind, dass die Rotationsachsen dieser zwei oder aller drei Bauteile in einer gemeinsamen Rotationsachse (11) zusammen fallen
und/oder
dass die Milchzuführeinheit (3) einstückig oder mehrstückig (3a, 3b) ausgebildet ist und/oder
dass die Milchzuführeinheit (3) oder mindestens ein Teil (3a, 3b) derselben, bevorzugt alle Teile (3a, 3b) derselben, zumindest abschnittsweise, bevorzugt vollständig aus einem elastisch verformbaren Material, insbesondere einem Elastomer, ausgebildet ist/sind
und/oder
dass die Düse (1) zumindest abschnittsweise, bevorzugt vollständig aus einem starren Material, insbesondere aus einem Hartkunststoff, ausgebildet ist
und/oder
dass die Düse (1) werkzeuglos aus der Milchzuführeinheit (3) entnehmbar ist.

10. Kaffeemaschine, insbesondere Kaffeevollautomat, mit einer Aufschäumeinheit nach einem der vorhergehenden Ansprüche,
wobei bevorzugt die Dampfzuleitung (2) fest mit einem Gehäuse (12) der Kaffeemaschine verbunden und aus dem Gehäuse (12) herausgeführt (2a) ist und die Dampfzuleitung (2) an ihrem aus dem Gehäuse (12) herausgeführten Ende (2a) mit der Milchzuführeinheit (3) und/oder der Düse (1) verbindbar ist oder verbunden ist.

## Claims

1. Foaming unit, in particular for foaming milk (M) or a milk-air mixture (M/L), having
a nozzle (1) and a vapour supply (2) for supplying vapour (D) or a vapour-air mixture (D/L) to the nozzle (1), and
a milk supply unit (3), with which the milk (M) or the milk-air mixture (M/L) can be supplied at least partially to the vapour (D) or vapour-air mixture (D/L), which flows out of the nozzle (1), in a manner involving flowing around the nozzle (1) along the outflow direction (4) thereof when seen from the peripheral side of the nozzle,
***characterised in that**,*
the milk supply unit (3) or a part (3b) thereof forms an overflow flange (7) that is separated from the nozzle (1) and completely encloses the nozzle (1) and/or the outlet (1a) thereof on the peripheral side (5), said flange being able to be flowed through by the milk (M) or the milk-air mixture (M/L) and with which the milk (M) or the milk-air mixture (M/L) is able to be diverted out of the nozzle (1) in the direction of the outflow direction (4).

2. Foaming unit according to the preceding claim,
***characterised by**,*
a thin region (hollow chamber 8) that comprises the outer periphery (7a) of the overflow flange (7), to which the milk (M) or the milk-air mixture (M/L) - seen relative to the outer periphery (7a) of the overflow flange (7) - can preferably be supplied tangentially, and can preferably be supplied by means of one or more milk lines (9) that flow tangentially into the thin region (8),
wherein the thin region (8) is preferably formed to be at least partially annular and/or is preferably enclosed on the outer peripheral side by one part (3a) of the milk supply unit (3) .

3. Foaming unit according to the preceding claim,
***characterised in that**,*
the milk line(s) (9) flow(s) into the thin region (8) perpendicular to the outflow direction (4) of the nozzle (1).

4. Foaming unit according one of the preceding claims,
***characterised in that**,*
the milk (M) or the milk-air mixture (M/L) can first be directed against the outflow direction (4) of the nozzle (1) through the milk supply unit (3) or at least one part (3a, 3b, 7) thereof, in particular through the overflow flanges (7) and/or through the nozzle (1), and then can be diverted towards the outflow direction (4) of the nozzle (1).

5. Foaming unit according one of the preceding claims,
***characterised by***,
several milk supply units (3), with which the milk (M) or the milk-air mixture (M/L) can at least partially be supplied to the vapour (D) or vapour-air mixture (D/L) flowing out of the nozzle (1) in a manner involving flowing around the nozzle (1) along the outflow direction (4) thereof when seen from the peripheral side of the nozzle.

6. Foaming unit according to the preceding claim,
***characterised in that**,*
the milk supply unit (3) or at least one part (3a, 3b, 7) thereof at least partially or preferably completely encloses the nozzle (1) and/or the outlet (1a) thereof when seen over the outer periphery (5) thereof, and/or **in that** the nozzle (1) and/or the outlet (1a) thereof is fed at least partially concentrically within the milk supply unit (3) or at least one part (3a, 3b, 7) thereof.

7. Foaming unit according to one of the preceding claims,
***characterised in that**,*
the outflow direction (4) of the vapour (D) or the vapour-air mixture (D/L) from the nozzle (1) on the one hand, and the flow direction (6) of the milk (M) or the milk-air mixture (M/L) along the outer side (5) of the nozzle on the other hand, differ from each other by an angle of less than 30°, preferably less than 20° and particularly preferably less than 10° at the point of the outlet (1a) of the nozzle.

8. Foaming unit according to one of the preceding claims,
***characterised in that**,*
a mixing region (10) for mixing the vapour (D) or vapour-air mixture (D/L) flowing out of the nozzle (1) with the milk (M) or the milk-air mixture (M/L) is formed between the nozzle (1) and the milk supply unit (3) or a part (3b, 7) thereof and/or in the region of the outlet (1a) of the nozzle (1),
wherein, when seen in the outflow direction (4) of the nozzle (1), the mixing region (10) or a section thereof tapers so as to increase the flow speed before and/or after the combining of the milk (M) or the milk-air mixture (M/L) with the vapour (D) or vapour-air mixture (D/L) and/or the mixing region (10) or a section thereof preferably encloses the nozzle (1) and/or the outlet (1a) thereof at least partially annularly.

9. Foaming unit according to one of the preceding claims,
***characterised in that**,*
at least two, preferably all three of the following components:
- nozzle (1),
- vapour supply (2), and
- milk supply unit (3)
are formed and arranged, at least partially, with such a level of rotational symmetry that the axes of rotation of these two or all three components concur in a mutual axis of rotation (11),
and/or
the milk supply unit (3) is formed in one part or many parts (3a, 3b),
and/or
the milk supply unit (3) or at least one part (3a, 3b) thereof, preferably all parts (3a, 3b) thereof, is/are formed at least partially and preferably completely from an elastically mouldable material, in particular an elastomer,
and/or
the nozzle (1) is formed at least partially and preferably completely from a rigid material, in particular from a hard plastic,
and/or
the nozzle (1) can be removed from the milk supply unit (3) without using a tool.

10. Coffee machine, in particular automatic coffee dispenser, having a foaming unit according to one of the preceding claims,
wherein the vapour supply (2) is preferably connected in a fixed manner to a housing (12) of the coffee machine and leads out (2a) of the housing (12), and the vapour supply (2) can be connected, or is connected, to the milk supply unit (3) and/or the nozzle (1) at its end (2a) leading out from the housing (12).

## Revendications

1. Unité de moussage servant en particulier à faire mousser du lait (M) ou un mélange de lait et d'air (M/L), comprenant
une buse (1) et une conduite d'amenée de vapeur servant à amener de la vapeur (D) ou un mélange de vapeur et d'air (D/L) à la buse (1) et
une unité d'amenée de lait (3), laquelle permet d'amener le lait (M) ou le mélange de lait et d'air (M/L) à la vapeur (D) ou au mélange de vapeur et d'air (D/L) s'écoulant hors de la buse (1) d'une manière consistant à envelopper au moins par endroits la buse (1), en regardant le long de la direction d'écoulement vers l'extérieur, (4) côté périphérie extérieure de la buse,
**caractérisée en ce**
**que** l'unité d'amenée de lait (3) ou une partie (3b) de cette dernière forme un col de trop-plein (7) espacé de la buse (1), entourant intégralement côté périphérie extérieure (5) la buse (1) et/ou la sortie (1a) de cette dernière, lequel col de trop-plein peut être parcouru par le lait (M) ou par le mélange de lait et d'air (M/L) et lequel permet de dévier le lait (M) ou le mélange de lait et d'air (M/L) vers la direction d'écoulement vers l'extérieur (4) de la buse (1).

2. Unité de moussage selon la revendication précédente,
**caractérisée par**
une zone (cavité 8) de petite dimension entourant la périphérie extérieure (7a) du col de trop-plein (7), à laquelle le lait (M) ou le mélange de lait et d'air (M/L) - vu par rapport à la périphérie extérieure (7a) du col de trop-plein (7) - peut être amené de préférence de manière tangentielle, de préférence au moyen d'une ou de plusieurs arrivées de lait (9) débouchant de manière tangentielle dans la zone (8) de petite dimension,
la zone (8) de petite dimension étant réalisée de préférence au moins par endroits de manière à présenter une forme annulaire et/ou étant entourée de préférence côté périphérie extérieure d'une partie (3a) de l'unité d'amenée de lait (3).

3. Unité de moussage selon la revendication précédente,
**caractérisée en ce**
**que** l'arrivée/les arrivées de lait (9) débouche/débouchent dans la zone (8) de petite dimension de manière perpendiculaire par rapport à la direction d'écoulement vers l'extérieur (4) de la buse (1).

4. Unité de moussage selon l'une quelconque des revendications précédentes,
**caractérisée en ce**
**que** le lait (M) ou le mélange de lait et d'air (M/L) peut être dirigé dans un premier temps dans le sens contraire à la direction d'écoulement vers l'exttérieur (4) de la buse (1) puis peut être dévié vers la direction d'écoulement vers l'extérieur (4) de la buse (1) par l'unité d'amenée de lait (3) ou par au moins une partie (3a, 3b, 7) de cette dernière, en particulier par le col de trop-plein (7), et/ou par la buse (1).

5. Unité de moussage selon l'une quelconque des revendications précédentes,
**caractérisée par**
plusieurs unités d'amenée de lait (3), lesquelles permettent d'amener le lait (M) ou le mélange de lait et d'air (M/L) à la vapeur (D) ou au mélange de vapeur et d'air (D/L) s'écoulant hors de la buse (1) de manière consistant à envelopper la buse (1), au moins par endroits, côté périphérie extérieure de celle-ci, en regardant le long de la direction d'écoulement vers l'extérieur (4).

6. Unité de moussage selon la revendication précédente,
**caractérisée en ce**
**que** l'unité d'amenée de lait (3) ou au moins une partie (3a, 3b, 7) de cette dernière entoure la buse (1) et/ou la sortie (1a) de cette dernière, vu sur la périphérie extérieure (5) de la buse/de la sortie de cette dernière, au moins par endroits, de préférence intégralement, et/ou en ce que la buse (1) et/ou la sortie (1a) de cette dernière est/sont guidée(s), au moins par endroits de manière concentrique à l'intérieur de l'unité d'amenée de lait (3) ou au moins d'une partie (3a, 3b, 7) de cette dernière.

7. Unité de moussage selon l'une quelconque des revendications précédentes,
**caractérisée en ce**
**que** la direction d'écoulement vers l'extérieur (4) de la buse (1) de la vapeur (D) ou du mélange de vapeur et d'air (D/L), d'une part, et la direction d'écoulement (6) du lait (M) ou du mélange de lait et d'air (M/L) le long du côté extérieur (5) de la buse (1), d'autre part, peuvent s'écarter l'une de l'autre à hauteur de la sortie (1a) de la buse, selon un angle inférieur à 30°, de préférence inférieur à 20°, de préférence inférieur à 10°.

8. Unité de moussage selon l'une quelconque des revendications précédentes,
**caractérisée en ce**
**qu'**une zone destinée au mélange (10), servant à mélanger la vapeur (D) ou le mélange de vapeur et d'air (D/L) s'écoulant hors de la buse (1) au lait (M) ou au mélange de lait et d'air (M/L), est réalisée entre la buse (1) et l'unité d'amenée de lait (3) ou une partie (3b, 7) de cette dernière et/ou dans la zone de la sortie (1a) de la buse (1),
de préférence, la zone destinée au mélange (10) ou une section de cette dernière se rétrécissant, en regardant dans le sens d'écoulement de sortie (4) de la buse (1), afin d'augmenter la vitesse d'écoulement avant et/ou après l'ajout du lait (M) ou du mélange de lait et d'air (M/L) à la vapeur (D) ou au mélange de vapeur et d'air (D/L), et/ou, de préférence, la zone destinée au mélange (10) ou une partie de cette dernière entourant la buse (1) ou la sortie (1a) de cette dernière au moins par endroits de manière à présenter une forme annulaire.

9. Unité de moussage selon l'une quelconque des revendications précédentes,
**caractérisée en ce**
**qu'**au moins deux, de préférence les trois éléments qui suivent
- la buse (1),
- la conduite d'amenée de vapeur (2) et
- l'unité d'amenée de lait (3)
sont réalisés au moins par endroits de manière symétrique en rotation et sont disposés de telle manière que les axes de rotation desdits deux éléments ou desdits trois éléments coïncident avec un axe de rotation commun (11),
et/ou
en ce que l'unité d'amenée de lait (3) est réalisée en une seule partie ou en plusieurs parties (3a, 3b),
et/ou
en ce que l'unité d'amenée de lait (3) ou au moins une partie (3a, 3b) de cette dernière, de préférence toutes les parties (3a, 3b) de cette dernière est réalisée/sont réalisées au moins par endroits, de préférence intégralement, à partir d'un matériau élastiquement déformable, en particulier à partir d'un élastomère,
et/ou
en ce que la buse (1) est réalisée au moins par endroits, de préférence intégralement, à partir d'un matériau rigide, en particulier à partir d'un plastique dur,
et/ou
en ce que la buse (1) peut être retirée sans outil de l'unité d'amenée de lait (3).

10. Machine à café, en particulier machine à café entièrement automatique, équipée d'une unité de moussage selon l'une quelconque des revendications précédentes,
de préférence, la conduite d'amenée de vapeur (2) étant reliée de manière fixe à un boîtier (12) de la machine à café et étant guidée de manière à sortir (2a) du boîtier (12), et la conduite d'amenée de vapeur (2) peut être reliée ou est reliée, au niveau de son extrémité (2a) guidée de manière à sortir du boîtier (12), à l'unité d'amenée de lait (3) et/ou à la buse (1).
